# Europäisches Patentamt

## European Patent Office

## Office européen des brevets

(19)

(11) Veröffentlichungsnummer: **0 109 086**
A1

(12) **EUROPÄISCHE PATENTANMELDUNG**

(21) Anmeldenummer: **83111393.1**

(22) Anmeldetag: **15.11.83**

(51) Int. Cl.³: **C 03 B 3/00**, C 03 B 5/235

(30) Priorität: **15.11.82 DE 3242210**

(43) Veröffentlichungstag der Anmeldung: **23.05.84**
**Patentblatt 84/21**

(84) Benannte Vertragsstaaten: **BE DE FR GB IT**

(71) Anmelder: **Sorg GmbH & Co. KG, Im Aller 23 Postfach 520, D-8770 Lohr/Main (DE)**

(72) Erfinder: **Köster, Jörg, Friedhofstrasse 13, D-8775 Partenstein (DE)**

(74) Vertreter: **Patentanwälte Schulze Horn und Hoffmeister, Goldstrasse 36, D-4400 Münster (DE)**

(54) **Verfahren zum Auftempern bzw. Anfahren von Glasschmelzöfen und Vorrichtung zur Durchführung dieses Verfahrens.**

(57) Verfahren zum Auftempern bzw. Anfahren von Glasschmelzöfen, bei dem Glasscherben in den Ofen eingegeben, diese erhitzt und aufgeschmolzen werden und der Ofen auf Arbeitstemperatur gebracht wird, wobei die Scherben gleichzeitig durch einen Flammstrahl eines Brenners erhitzt und in den Ofen eingeblasen werden sowie eine Vorrichtung zur Durchführung des Verfahrens.

EP 0 109 086 A1

## Verfahren zum Auftempern bzw. Anfahren von Glasschmelz-öfen und Vorrichtung zur Durchführung dieses Verfahrens

Die Erfindung betrifft ein Verfahren zum Auftempern bzw. Anfahren oder Vollschmelzen von Glasschmelzöfen, bei dem Glasscherben in den Ofen eingegeben, diese erhitzt und aufgeschmolzen werden und der Ofen auf Arbeitstemperatur gebracht wird sowie eine Vorrichtung zur Durchführung dieses Verfahrens.

Es ist allgemein üblich und bekannt, Glasschmelzöfen nach ihrer Erbauung oder nach einer Reparatur mittels Öl- oder Gasbrennern aufzuheizen, bis sie eine Temperatur von ca. 1200° C aufweisen. Es erfolgt dann die Scherbenzugabe, wodurch der Ofen wieder abkühlt und danach eine weitere erneute Temperaturanpassung. Dieser Vorgang kann sich mehrmals wiederholen.

Nachteilig bei diesem bekannten Verfahren ist es, daß aufgrund der Temperaturwechsel das Ofenmaterial starken Spannungen unterworfen wird und das Feuerfestmaterial sogar springen kann. Weiterhin ist für das Antempern ein erheblicher Zeitraum erforderlich, während welchem Spezialpersonal eingesetzt werden muß, um die Eisenkonstruktion dem jeweiligen Ausdehnungszustand des Feuerfestmaterials anzupassen. Während der Zeit des Antemperns ist selbstverständlich eine Nutzung des Ofens zur Glasproduktion nicht möglich, so daß unverhältnismäßig viel Zeit für den Neubau oder die Reparatur vorgesehen werden muß.

Es ist daher Aufgabe der Erfindung, ein kostengünstiges und zeitsparendes Verfahren sowie eine Vorrichtung zur Durchführung dieses Verfahrens zu schaffen, bei denen ein gleichmäßiges Aufheizen erfolgt, Temperaturwechsel vermieden werden und durch die eine größtmögliche Schonung des Feuerfestmaterials des Ofens erfolgt und die es gestatten, mit dem Ofen früher als bisher möglich die vorgesehene Produktion aufzunehmen.

Diese Aufgabe wird verfahrensmäßig erfindungsgemäß dadurch gelöst, daß die Scherben gleichzeitig durch einen Flammstrahl eines Brenners erhitzt und in den Ofen eingeblasen werden, wobei vorrichtungsmäßig die Lösung darin besteht, daß mindestens ein Brenner zur Erzeugung eines Flammstrahles vorhanden ist, der einen Zuführstutzen für die Scherben in den Flammstrahl und ein gekühltes Ausblasrohr in den Ofen aufweist. Der Betrieb dieses Brenners wird durch die für den Ofenbetrieb vorgesehenen Brenner unterstützt.

Nach der Erfindung ist es also für den Fachmann überraschend möglich, Scherben mit Hilfe eines Brenners bereits vorerhitzt einzublasen, wobei dieser Brenner gleichzeitig mit den Ofenbrennern betrieben wird.

Vorteilhaft können die Scherben durch Schwerkrafteinfluß in den Flammstrahl befördert werden, so daß die sonst übliche Verwendung von kalter Förderluft entfällt und die Scherben treten unter einem Winkel von 20 - 40$^\circ$ in den Flammstrahl ein, wodurch die notwendige Geschwindigkeitserhöhung zum Fördern bis über die Ofenmitte hinaus gewährleistet wird.

Im einzelnen beträgt die Austrittsgeschwindigkeit der Scherben und des Flammstrahles über 6, vorteilhaft 8 - 10 m/sec. und die Scherben werden mindestens auf eine Temperatur von $550^\circ$ C, insbesondere $580 - 650^\circ$ C aufgeheizt.

Die Vorrichtung zur Durchführung des erfindungsgemäßen Verfahrens weist im einzelnen einen Scherbenbunker und einen diesen mit dem Brennergehäuse verbindenden Stutzen auf, wobei der Stutzen schräg von oben in das Brennerrohr nahe dem ofenseitigen Ende desselben eintritt.

Um ein Schmelzen des ofenseitigen Endes des Brennerrohres im Bereich der hohen Temperatur kurz vor der Beendigung des Antemperns zu verhindern, kann der untere Bereich des ofenseitigen Endes des Brennerrohres als kühlwasserdurchspülte Kammer ausgebildet sein.

Im folgenden wird ein Ausführungsbeispiel der Erfindung anhand einer Zeichnung näher erläutert, welche im Schnitt schematisch einen Brenner zur Zugabe der erhitzten Scherben in den Ofenraum zeigt.

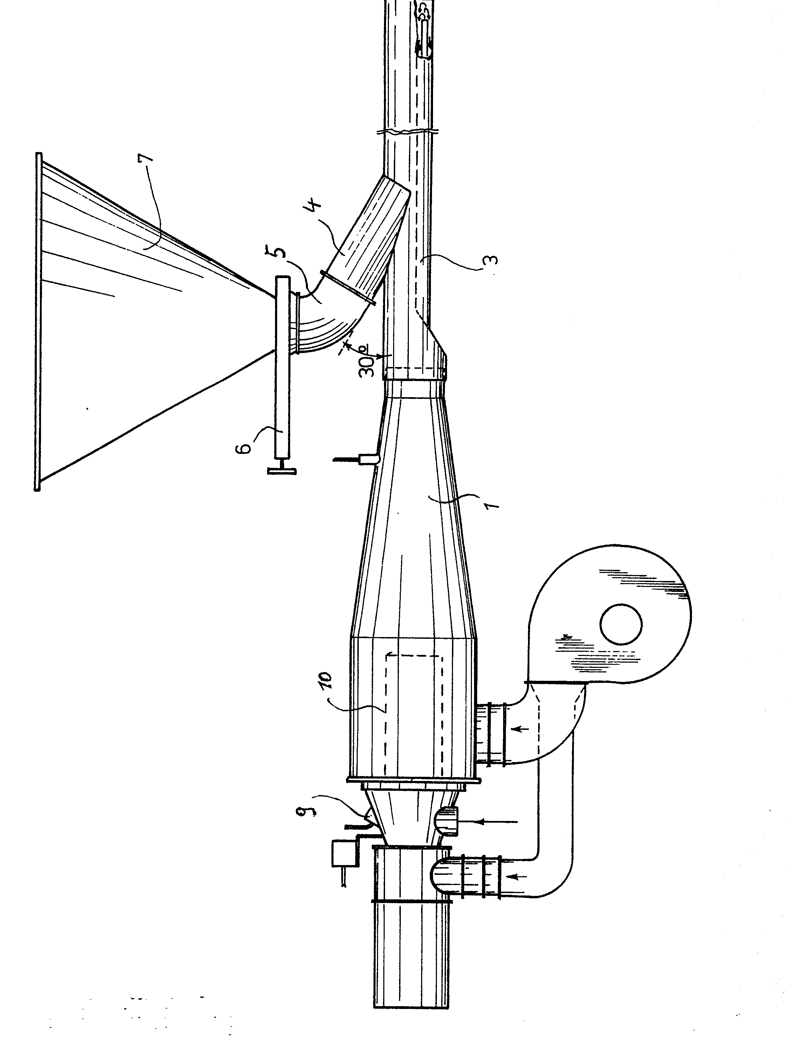

Gemäß der Zeichnung besteht der erfindungsgemäße, allgemein mit 1 bezeichnete Brenner aus einem Brennergehäuse 8 mit einer Brennerdüse 9 und den üblichen Luftzuführungen, wobei das Brennergehäuse 8 ofenseitig in ein Brennerrohr 2 ausläuft, welches in den Ofenraum hineinragt. Das Brennerrohr 2 weist an seiner Unterseite eine kühlwasserdurchspülte Kammer 3 auf. Oben auf das Brennerrohr 2 ist mit Abstand von dessen ofenseitigem Ende ein Stutzen 4 für die Scherbenzugabe aufgesetzt, welcher in das Brennerrohr 2 einmündet und welcher über einen Krümmer 5 und einen Flachschieber 6 mit einem Scherbenbunker 7 verbunden ist.

Die Mittelachse des Brennerrohres 2 und die Mittelachse des Stutzens 4 weisen miteinander einen Winkel von $30^\circ$

4

0109086

auf, wobei Winkelbereiche zwischen 20 und 40° ebenfalls günstig sind.

Die Scherben werden unter Schwerkrafteinfluß aus dem Scherbenbunker nach Dosierung durch die Stellung des Flachschiebers 6 durch den Stutzen 4 in das Brennerrohr eingegeben, wobei die genannte Winkelgröße einerseits ein einwandfreies Eintreten in das Brennerrohr bei einer einwandfreien Förderung durch den Krümmer 5 und den Stutzen 4 gewährleistet und weiterhin bereits eine gewisse Beschleunigung der Scherben erreicht wird, so daß diese nach Einwirken des Flammstrahles auf sie mit hoher Geschwindigkeit in den Ofenraum eintreten.

Die Konstruktion des eigentlichen Brenners ist dem Fachmann bekannt, so daß auf eine detaillierte Schilderung verzichtet werden kann. Wesentlich ist allerdings, daß durch geeignet angebrachte Verengungen des Luftstromes bzw. des Flammstrahles eine genügend hohe Austrittsgeschwindigkeit erreicht wird, um die genannte Beschleunigung der Scherben auf Geschwindigkeiten zu gewährleisten, die das Einblasen auch über die Ofenmitte hinaus gestattet. Die Geschwindigkeit des Flammstrahles und der Scherben beträgt mehr als 6 m/sec., vorteilhaft 8 - 10 m/sec.

Obwohl die Verweildauer der Scherben im Flammstrahl ersichtlicherweise nur gering sein kann, erreichen diese für den Fachmann überraschend doch Temperaturen von mehr als 550° C, insbesondere Temperaturen von 580 - 650° C.

In einer weiteren Ausgestaltung des erfindungsgemäßen Verfahrens können auch noch wesentlich höhere Temperaturen eingestellt werden, wenn die Scherbenmenge pro Zeiteinheit gedrosselt wird.

0109086

Der erfindungsgemäße Temperbrenner vermeidet erstmalig das Absinken der Temperatur bei der Scherbeneingabe und verringert daher auch die Zeit zum Antempern erheblich. Wahlweise können natürlich neben den Arbeitsbrennern für den Betrieb des Ofens auch noch weitere zusätzliche Brenner verwendet werden, die entweder nur die Aufheizung des Ofens verbessern oder aber auch, wie beschrieben, Scherben zugeben. Das Verfahren ist also nicht auf die Verwendung nur eines Brenners zur Scherbenzugabe beschränkt und mit Hilfe der Erfindung kann also unter Vermeidung von Temperaturwechseln die Anfahrzeit eines Ofens erheblich verkürzt werden. Es kann also von einer idealen Lösung der anstehenden Probleme gesprochen werden.

Um die erforderliche hohe Geschwindigkeit des Gases beim Austritt aus dem Brennerrohr zu erhalten, ist dieses zwischen dem Luftzutritt und der Mündung mit Einschnürabschnitten versehen, die für eine Beschleunigung des Luft-Gasgemisches sorgen. Im Brennerrohr ist ein konzentrisches Innenrohr eingesetzt, in dem die Brennstoffdüse angeordnet ist und die hauptsächliche Luftzufuhr erfolgt in dem Bereich zwischen dem Mantel des Brennerrohres und dem Innenrohr. Durch diese Anordnung wird eine optimale Mischung des Luft-Gasgemisches erreicht und es ergibt sich eine erhöhte Flammtemperatur, die zur Aufheizung der Scherben notwendig ist.

Patentansprüche :

1. Verfahren zum Auftempern bzw. Anfahren von Glasschmelzöfen, bei dem Glasscherben in den Ofen eingegeben, diese erhitzt und aufgeschmolzen werden und der Ofen auf Arbeitstemperatur gebracht wird, dadurch gekennzeichnet, daß die Scherben gleichzeitig durch einen Flammstrahl eines Brenners erhitzt und in den Ofen eingeblasen werden.

2. Verfahren nach Anspruch 1, dadurch gekennzeichnet, daß die Scherben durch Schwerkrafteinfluß in den Flammstrahl befördert werden.

3. Verfahren nach Anspruch 2, dadurch gekennzeichnet, daß die Scherben unter einem Winkel zwischen 20 und 40$^{\circ}$ in den Flammstrahl eintreten.

4. Verfahren nach Anspruch 1 bis 3, dadurch gekennzeichnet, daß die Austrittsgeschwindigkeit der Scherben und des Flammstrahls aus dem Brenner mehr als 6 m/sec. beträgt.

5. Verfahren nach Anspruch 4, dadurch gekennzeichnet, daß die Austrittsgeschwindigkeit 8 - 10 m/sec. beträgt.

6. Verfahren nach einem der Ansprüche 1 bis 5, dadurch gekennzeichnet, daß die Scherben im Flammstrahl auf eine Temperatur von mehr als 550$^{\circ}$ C erhitzt werden.

7. Verfahren nach Anspruch 6, dadurch gekennzeichnet, daß die Scherben auf eine Temperatur von 580 bis 650$^{\circ}$ C erhitzt werden.

8. Vorrichtung zur Durchführung des Verfahrens nach Anspruch 1 bis 7, dadurch gekennzeichnet, daß sie einen Brenner (1) zur Erzeugung eines Flammstrahls, eine Zuführung (4) für die Scherben in den Flammstrahl und ein gekühltes Ausblasrohr (2) in den Ofen aufweist.

9. Vorrichtungnach Anspruch 8, dadurch gekennzeichnet, daß ein einen Scherbenbunker (7) und das Brennergehäuse verbindender Stutzen (4) schräg von oben im Abstand des ofenseitigen Endes in das Brennerrohr (2) eintritt.

10. Vorrichtung nach Anspruch 8 oder 9, dadurch gekennzeichnet, daß der untere Bereich des ofenseitigen Endes des Brennerrohres (2) als kühlwasserdurchspülte Kammer (3) ausgebildet ist.

11. Vorrichtung nach Anspruch 8 bis 10, dadurch gekennzeichnet, daß das Brennerrohr zwischen dem Luftzutritt und der Mündung Einschnürabschnitte aufweist.

12. Vorrichtung nach Anspruch 11, dadurch gekennzeichnet, daß im Brennerrohr ein konzentrisches Innenrohr (10) eingesetzt ist, in welchem die Brennstoffdüse angeordnet ist und daß die Luftzufuhr in den Bereich zwischen den Mantel des Brennerrohres und des Innenrohres erfolgt.

0109086

Europäisches
Patentamt

**EUROPÄISCHER RECHERCHENBERICHT**

0109086

Nummer der Anmeldung

EP 83 11 1393

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | FR-A-2 120 115 (TOKYO SHIBAURA ELECTRIC) <br> * Figur 5; Seiten 6-9; Ansprüche 1,3 * | 1-12 | C 03 B 3/00 <br> C 03 B 5/235 |
| X,Y | US-A-1 500 651 (SMITH) <br> * Figuren 5-7; Ansprüche 1-6 * | 1-12 | |
| Y | US-A-3 434 704 (WARD) <br> * Insgesamt * | 1,8 | |
| A | DE-A-1 471 857 (HOTWORK) <br> * Insgesamt * | 1,8 | |
| A | US-A-4 000 962 (HOTWORK) <br> * Insgesamt * | 1,8 | RECHERCHIERTE SACHGEBIETE (Int. Cl. 3) |
| | | | C 03 B |

Der vorliegende Recherchenbericht wurde für alle Patentansprüche erstellt.

| Recherchenort <br> DEN HAAG | Abschlußdatum der Recherche <br> 22-02-1984 | Prüfer <br> VAN DEN BOSSCHE W.L. |
|---|---|---|

EPA Form 1503. 03.82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument